# EUROPÄISCHE PATENTANMELDUNG

(11) **EP 3 402 042 A1**
(43) Veröffentlichungstag der Anmeldung: **14.11.2018**
(21) Anmeldenummer: 17170592.4
(22) Anmeldetag: 11.05.2017
(51) Int. Cl.: H02K 1/27, H02K 15/03

(54) **BEFESTIGUNG EINES BANDAGEFADENS ZUR FIXIERUNG UND POSITIONIERUNG VON PERMANENTMAGNETEN**

(71) Anmelder: Siemens Aktiengesellschaft, 80333 München (DE)
(72) Erfinder: Bott, Erich, 97618 Hollstadt (DE); Heim, Bruno, 97633 Grosseibstadt (DE); Huter, Eric, 97616 Bad Neustadt a. d. Saale (DE); Kessler, Winfried, 97647 Hausen (DE); Kraus, Andreas, 97647 Sondheim (DE); Schmitt, Daniel, 97708 Bad Bocklet (DE)

(57) **Zusammenfassung**

Die Erfindung betrifft einen Rotor (1) einer elektrischen Maschine, der wenigstens ein Rotorpaket (3) und wenigstens zwei Permanentmagnete (2) umfasst. Die Permanentmagnete (2) sind an der Oberfläche des Rotorpakets (3) angeordnet und sind durch wenigstens eine Bandage an der Oberfläche des Rotorpakets fixiert und positioniert. Der Rotor (1) weist am Rotorpaket (3) oder an wenigstens einem Permanentmagneten (2) wenigstens ein Mittel zur Fixierung eines Fadenanfangs (5) und/oder eines Fadenendes (7) eines Bandagefadens auf. Eine Umwicklung des Rotors (1) mit dem Bandagefaden (8), vorzugsweise einem Glasfaser-Bandagefaden, bildet eine als Fadenbandage ausgeführte Bandage aus. Zudem betrifft die Erfindung ein Verfahren zur Bandagierung eines derartigen Rotors (1) einer elektrischen Maschine.

## Beschreibung

Die Erfindung betrifft einen Rotor einer elektrischen Maschine, der wenigstens ein Rotorpaket und wenigstens zwei Permanentmagnete umfasst, wobei die Permanentmagnete an der Oberfläche des Rotorpakets fixiert und positioniert sind. Ferner betrifft die Erfindung ein Verfahren zur Bandagierung eines Rotors einer elektrischen Maschine.

Permanenterregte Synchronmaschinen umfassen einen Stator und einen Rotor. Um eine Permanenterregung zu erreichen, umfasst der Rotor ein Rotorpaket, vorzugsweise in Form eines Blechpakets, sowie Permanentmagnete. Die Permanentmagnete sind auf dem Rotorpaket angeordnet und übertragen das Drehmoment auf eine an dem Rotor befestigte Welle. Insbesondere bei permanentmagneterregten Servomotoren werden hohe Drehzahlen erreicht, weshalb die Permanentmagnete sicher und fest auf dem Rotorpaket befestigt sein müssen.

Bisher wird dies mittels einer Bandagierung des Rotors erreicht. Eingesetzt wird hierbei eine sogenannte Prepreg-Bandage, die bereits mit einem Harz imprägniert ist und aus vielen einzelnen Fasern und/oder Filamenten besteht. Diese Bandage entsteht durch eine Umwicklung des Rotors mit einem Bandageband, welches in einer beispielhaften Ausführungsform 6 mm breit und 0,2 mm dick ist.

Der Anfang dieses Bandagebands muss jedoch um eine separate Bandagescheibe gewickelt werden, um eine definierte Vorspannung auf das Bandageband zu entwickeln und somit einen Anpressdruck auf die Permanentmagnete aufzubringen. Die Bandagescheibe befindet sich direkt im Anschluss an das Rotorpaket und vergrößert daher die axiale Länge des Rotors, weshalb dieser an Kompaktheit einbüßt.

Das Harz der Bandage wird nach der Umwicklung des Rotors unter Zuführung von Hitze ausgehärtet. Wird ein Temperaturprozess zur Aushärtung in Gang gesetzt, sinken einzelne Fasern der Prepreg-Bandage jedoch ab. Die in imprägnierten Bandagebändern in eine Harzmatrix eingebetteten Fasern sinken während der Aushärtephase unter Temperatureinfluss ab, sodass in einem unteren Bandbereich ein größerer Faseranteil und in einem oberen Bandbereich ein höherer Harzanteil besteht. Dies führt dazu, dass die Vorspannung und somit der Anpressdruck sinken. Das Aufheizen und Abkühlen bringt lange Prozesszeiten mit sich. Das Erhitzen, insbesondere der Einfluss zu hoher Temperaturen, kann zudem zu irreversiblen Magnetisierungsverlusten der Permanentmagnete führen.

Aus der DE10056875A1 ist ein Rotor einer elektrischen Maschine bekannt, der aus wenigstens zwei Modulen aufgebaut ist. Jedes Modul umfasst einen Trägerkörper und darauf angeordnete Permanentmagnete. Diese Rotormodule können um einen Drehwinkel gegeneinander verdreht angeordnet sein, um beispielsweise ein Nutrastmoment zu verringern.

Bei Rotoren, die aus gegeneinander verdrehten Rotormodulen aufgebaut sind, ist jedoch nur ein Aufkleben der Permanentmagnete möglich. Hohe Drehzahlen kann der Rotor daher nicht bewerkstelligen. Die Festigung der Permanentmagnete mittels eines Bandagebandes ist nicht möglich, da die dafür nötigen Bandagescheiben nicht zwischen den Rotormodulen angebracht werden können.

Der Erfindung liegt die Aufgabe zugrunde, eine platzsparende Bandagierung von Rotoren, die aus Rotormodulen aufgebaut sind, zu ermöglichen.

Die Lösung der gestellten Aufgabe gelingt durch einen Rotor einer elektrischen Maschine, der wenigstens ein Rotorpaket und wenigstens zwei Permanentmagnete umfasst, wobei die Permanentmagnete an der Oberfläche des Rotorpakets angeordnet und durch wenigstens eine Bandage an der Oberfläche des Rotorpakets fixiert und positioniert sind, wobei der Rotor am Rotorpaket und/oder an wenigstens einem Permanentmagneten wenigstens ein Mittel zur Fixierung eines Fadenanfangs und/oder eines Fadenendes eines Bandagefadens aufweist.

Ferner wird die Aufgabe gelöst durch ein Verfahren zur Bandagierung eines Rotors einer elektrischen Maschine, der wenigstens ein Mittel zur Fixierung eines Fadenanfangs und/oder eines Fadenendes eines Bandagefadens aufweist, wobei ein Fadenanfang eines Bandagefadens an einem Anfangshaltepunkt des Mittels zur Fixierung und/oder ein Fadenende des Bandagefadens an einem Endhaltepunkt des Mittels zur Fixierung befestigt wird.

Permanenterregte Synchronmaschinen, insbesondere Servomotoren, werden in vielen Gebieten eingesetzt. Hierzu zählen Industrieanlagen, Werkzeugmaschinen, Fahrzeugantriebe oder auch Industrieroboter. Sie weisen eine hohe Leistungsdichte und einen hohen Wirkungsgrad auf. Aufgrund der Permanenterregung durch vorzugsweise Seltenerdmagnete, insbesondere Neodym-Eisen-Bor- oder Samarium-Kobalt-Magnete, sind keine wartungsintensiven Schleifringe im Motor erforderlich.

Die auf dem Rotorpaket befindlichen Permanentmagnete übertragen das Drehmoment auf eine an den Rotor angebundene Welle und müssen gegenüber hohen Drehzahlen beständig sein und daher sicher und fest auf dem Rotorpaket anhaften. Aufgrund der eingangs bereits erläuterten Nachteile einer Fixierung mit einem Bandageband werden die Permanentmagnete in der Erfindung mittels einer als Fadenbandage ausgeführten Bandage auf dem Rotorpaket befestigt.

Die Erfindung umfasst mehrere Möglichkeiten zur Fixierung eines Fadenanfangs und/oder Fadenendes eines Bandagefadens. Das jeweilige Mittel zur Fixierung des Fadenanafangs und/oder Fadenendes ist am Rotorpaket und/oder an wenigstens einem Permanentmagneten angebracht. Dies bietet den Vorteil, dass keine externen Bandagescheiben benötigt werden, die die Fertigung und anschließende Zusammenfügung von Rotormodulen unmöglich machen.

Vorzugsweise ist der Bandagefaden als Glasfaser-Bandagefaden ausgeführt. Vorteilhaft besteht dieser aus mehreren einzelnen Filamenten, die zur besseren Verarbeitung verdrillt sein können. Die Abmessungen sind je nach Anwendungsfall und Anforderung frei wählbar. Bei Textilfasern kann keine Dicke angegeben werden. Die Maßeinheit von Textilfasern wird vorzugsweise mit tex angegeben, wobei 1 tex = 1 g / 1000 m gilt. Die Filamente haben in der Regel eine runde Form und liegen je nach Anwendungsfall im Bereich von 4 bis 13 µm. Die Art der Verdrillung der Filamente ist abhängig von Anforderungen bezüglich einer Zugfestigkeit und einem max. zulässigen Schichtaufbau der Bandage. Vorteilhaft umfasst der Bandagefaden wenigstens zwei Einzelfilamente aus Glasfaser, welche zu einem Bandagefaden verdrillt sind. Als Faden verdrillte Filamente sind aufgrund der Formstabilität leichter zu verarbeiten als unverdrillte Fäden.

Eine Fadenbandage, welche die Permanentmagnete auf dem Rotor positioniert und fixiert, wird durch eine Umwicklung des Rotors mit dem Bandagefaden erreicht.

Durch die Verwendung eines einzelnen Bandagefadens ist ein benötigter Fadenzug deutlich geringer als bei der bisher verwendeten Prepreg-Bandage. Die Gefahr, den Rotor und/oder die Welle beim Bandagieren zu beschädigen, wird dadurch deutlich verringert. Zudem bringt die Verwendung eines Bandagefadens eine vereinfachte Maschinentopologie einer Bandagiervorrichtung mit sich, da nur einzelne Module des Rotors bandagiert werden.

Die Fadenbandage ist zudem unabhängig von den Dimensionen des Rotors. Mit einem einzigen Typ eines Bandagefadens können verschiedene Rotorvarianten mit unterschiedlichen Achshöhen bandagiert werden. Dies führt zu einer hohen Flexibilität und einer geringen Varianz.

Die Verwendung eines Glasfaser-Bandagefadens bringt noch einen weiteren Vorteil mit sich: Während eines Aushärteprozesses sinkt der Glasfaser-Bandagefaden nicht ab. Da der Bandagefaden im Gegensatz zur Prepreg-Bandage nicht mit Harz oder anderen Stoffen imprägniert ist, können im Aushärteprozess auch keine Fasern in der Harzmatrix absinken.

Vorteilhaft wird die Fadenbandage, vorzugsweise nach vollständiger Bandagierung des Rotors, mit wenigstens einem Klebstoff und/oder Harz benetzt. Der Klebstoff bzw. das Harz sind vorzugsweise UV-härtend. Durch Bestrahlung mit UV-Licht kann die Fadenbandage ausgehärtet werden. Diese Form der Aushärtung bietet den Vorteil, dass die Permanentmagnete nicht durch Hitze beschädigt werden können. Zudem wird nur wenig Zeit dafür benötigt.

Eine vorteilhafte Ausführung des Mittels zur Fixierung ist ein Klebepunkt, der wenigstens einen Klebstoff umfasst, welcher vorzugsweise UV-härtend ist, womit der Fadenanfang und/oder das Fadenende des Bandagefadens auf einem Permanentmagneten oder in einer zwischen zwei Permanentmagneten befindlichen Pollücke auf dem Rotorpaket fixiert wird. Der Klebepunkt kann durch flüssigen Klebstoff, eine Kleberaupe und/oder doppelseitiges Klebeband realisiert werden.

Der Klebepunkt kann als punktueller Klebepunkt und/oder als Klebestreifen, der mitunter von einem axialen Ende des Rotors zu einem anderen axialen Ende des Rotors reicht, ausgeführt sein. Der als Klebestreifen ausgeführte Klebepunkt muss nicht als durchgängiger Klebestreifen realisiert sein, sondern kann auch Unterbrechungen aufweisen. Zudem können weitere Klebepunkte ausgeführt sein, die den Bandagefaden nach einigen Windungen um den Rotor erneut fixieren.

Jedoch kann der Klebepunkt auch durch Anschweißen des Fadenanfangs und/oder -endes mittels eines Kunststoffes, insbesondere eines Thermoplasts, ausgeführt sein.

Die Fixierung des Fadenanfangs und/oder des Fadenendes mittels eines Klebepunktes stellt eine Befestigung durch Stoffschluss und Reibschluss dar und erleichtert einen Bandagiervorgang, bei welchem der Bandagefaden in Umfangsrichtung um den Rotor gewickelt wird. Bereits zu Beginn des Wickelvorgangs kann eine hohe Anzugskraft auf den Faden ausgeübt werden. Zudem ist kein zusätzliches Bauteil auf dem Rotor nötig. Der Bandagefaden wird nicht auf Scherung beansprucht, da er nicht über eine mitunter scharfe Kante gelegt wird.

Ist der Klebepunkt als Klebestreifen, der vorzugsweise von einem axialen Ende des Rotors zum anderen axialen Ende des Rotors reicht, realisiert, wird der Bandagefaden bei jeder Windung gehalten und fixiert. Dadurch nimmt die Vorspannung während des Bandagiervorgangs nicht ab.

Der Klebepunkt ist vorzugsweise auf einem Permanentmagneten angebracht, kann jedoch auch auf mehreren Permanentmagneten oder in einer Pollücke angebracht sein.

Eine weitere vorteilhafte Ausführung des Mittels zur Fixierung der Fadenbandage ist ein in der Pollücke zwischen zwei Permanentmagneten auf dem Rotor realisiertes Bauteil, insbesondere in Form wenigstens einer Klemmnase. Bei einem vorzugsweise als Blechpaket ausgeführten Rotorpaket wird aus einzelnen Blechen der Querschnitt des Rotors gestanzt. Die Bleche werden anschließend aneinandergefügt. Die Klemmnase muss daher nicht als externes Bauteil gefertigt und an den Rotor angefügt werden, sondern ist vorteilhaft bereits beim Stanzen der Bleche Teil des Querschnitts.

Die Klemmnase ist in einer ersten Ausführungsform an den Permanentmagneten angrenzend ausgeführt, eine Nasenspitze der Klemmnase zeigt zum Permanentmagneten. Vorteilhaft ist bezüglich der Umfangsrichtung an einem linken und einem rechten Ende des Permanentmagneten jeweils genau eine Klemmnase in der Pollücke ausgeführt. Aus Symmetriegründen kann dieses Prinzip an jeder Magnetseite, welche an eine Pollücke grenzt, angewendet werden. Somit grenzen insgesamt vier Klemmnasen an einen Permanentmagneten an. In einer Pollücke befinden sich vier Klemmenasen. Insbesondere der Fadenanfang des Bandagefadens wird zwischen wenigstens eine Klemmnase und den Permanentmagneten zu Beginn des Bandagiervorgangs geklemmt, um eine definierte Zugkraft aufzubringen.

In einer weiteren Ausführungsform ist wenigstens eine Klemmnase in wenigstens einer Pollücke realisiert. Vorteilhaft ist hierbei aus Symmetriegründen pro Pollücke genau eine Klemmnase ausgeführt. Die Nasenspitze der Klemmnase zeigt in Axialrichtung. Vorteilhaft werden die Klemmnasen wie bereits erläutert im Querschnitt abgebildet. Der Bandagefaden liegt bei dieser Ausführungsform bereits in Umfangsrichtung, wodurch er nicht durch Biegung beansprucht wird. Der Fadenanfang wie auch das Fadenende können mittels dieses Mittels zur Fixierung befestigt werden.

Ferner kann das Mittel zur Fixierung als in der Pollücke befindlicher Haken ausgeführt sein. Insbesondere der Fadenanfang des Bandagefadens kann hierbei zu einer Öse geknotet am Haken befestigt werden um eine definierte Zugkraft aufzubringen. Der Haken ist vorteilhaft an den Permanentmagneten angrenzend ausgeführt, eine Nasenspitze des Hakens zeigt zum Permanentmagneten. Vorteilhaft ist bezüglich der Umfangsrichtung an einem linken und einem rechten Ende des Permanentmagneten jeweils genau ein Haken in der Pollücke ausgeführt. Aus Symmetriegründen können auch zwei Haken an jeder Magnetseite, welche an eine Pollücke grenzt, angewendet werden. Somit grenzen insgesamt vier Haken an einen Permanentmagneten an. In einer Pollücke befinden sich vier Haken. Die Haken werden im Querschnitt des Rotors abgebildet. Der zu einer Öse geknotete Fadenanfang wird mechanisch durch einen Formschluss am Rotor befestigt. Der Bandagefaden liegt in Umfangsrichtung und erfährt somit keine Beanspruchung durch Biegung.

Die beschriebenen Mittel zur Fixierung der Fadenbandage bieten den Vorteil, dass die Rotoren kompakt gebaut werden können. Es sind keine Bandagescheiben nötig, die den Rotor und somit die gesamte elektrische Maschine vergrößern. Der Entfall der Bandagescheiben ermöglicht zudem eine Fertigung von Rotormodulen, die bei Bedarf zusammengefügt werden können. Dadurch muss für eine Achshöhe nur eine Rotorvariante gefertigt werden. Durch das Zusammenfügen zweier oder mehrerer Rotormodule - auch eine Variation eines Staffelwinkels ist möglich - entsteht der gewünschte Rotortyp.

Die beschriebenen Mittel zur Fixierung werden während eines Verfahrens zur Bandagierung eines Rotors einer elektrischen Maschine eingesetzt. Der Fadenanfang des Bandagefadens wird hierbei an einem Anfangshaltepunkt des Mittels zur Fixierung, das Fadenende des Bandagefadens an einem Endhaltepunkt des Mittels zur Fixierung befestigt. Der Anfangs- bzw. Endhaltepunkt muss nicht als punktueller Punkt ausgeführt sein, auch eine Ausführung als Streifen oder unterbrochener Streifen ist beispielsweise möglich.

Der Fadenanfang des Bandagefadens wird zu Beginn des Bandagiervorgangs am Anfangshaltepunkt, insbesondere in Form eines Klebepunkts oder eines in der Pollücke realisierten Bauteils, befestigt, um eine definierte Zugkraft auf den Bandagefaden aufzubringen.

Vorteilhaft wird der Bandagefaden in einem Strang in Umfangsrichtung von einem vorderen axialen Ende des Rotors zu einem hinteren axialen Ende des Rotors um ebendiesen gewickelt. Für eine mehrlagige Umwicklung wird der Bandagiervorgang vom hinteren axialen Ende zum vorderen axialen Ende des Rotors wiederholt. Auf diese Weise sind auch drei-, vier- bzw. mehrlagige Umwicklungen möglich.

Nach vollständiger Umwicklung des Rotors mit dem Bandagefaden - die Umwicklung ist sowohl ein- als auch mehrlagig möglich - bzw. nach Abschluss des Bandagiervorgangs wird das Fadenende des Bandagefadens am Endhaltepunkt fixiert.

Vorteilhaft wird die Fadenbandage mit wenigstens einem Klebstoff und/oder Harz benetzt, welcher vorzugsweise UV-härtend ist. Der Klebstoff und/oder das Harz durchdringt die Fadenbandage. Mittels UV-Strahlung wird die Fadenbandage ausgehärtet. Hierbei treten keine hohen Temperaturen auf, deren Wärmeeintrag die Magnetisierung der Permanentmagnete schädigt.

Vorteilhaft werden einige Rotorpakete gefertigt und anschließend bandagiert. Diese fertigen Rotormodule werden gelagert und im Bedarfsfall besteht die Möglichkeit, die bereits bandagierten Rotormodule zu einem Rotor zusammenzufügen.

In einem alternativen Verfahren zur Bandagierung eines Rotors einer elektrischen Maschine wird der Fadenanfang des Bandagefadens in einem Winkel zur Umfangsrichtung, der größer 0° ist, über den Rotor gelegt. Vorteilhaft wird der Fadenanfang in Axialrichtung auf einen Permanentmagneten gelegt. Der Rotor und auch der Fadenanfang werden vom Bandagefaden, vorzugsweise in einem Strang und in Umfangsrichtung des Rotors, umwickelt. Hierbei wird eine Selbsthaltung erreicht, indem der Fadenanfang durch Reibschluss am Rotor befestigt wird. Dieses Verfahren eignet sich besonders, wenn Gründe gegen ein Bauteil oder Klebstoff bestehen, da auf diese verzichtet werden kann.

Auch für die Fixierung des Fadenendes legt die Erfindung ein alternatives Verfahren dar. Nach der vollständigen Umwicklung des Rotors wird hierbei das Fadenende, z. B. mittels Pressluft, durch die Pollücke gezogen, welche an einem oberen Ende von der Fadenbandage begrenzt ist. Das Fadenende wird in Richtung eines Permanentmagneten gezogen und zwischen wenigstens einen Permanentmagneten und die Fadenbandage geklemmt. Auch bei diesem Verfahren kann auf Bauteile und Klebstoffe verzichtet werden.

Somit wird ein Rotor einer elektrischen Maschine geschaffen, wobei das Mittel zur Fixierung der Fadenbandage als eine Selbsthaltung der Fadenbandage ausgeführt ist. Der Fadenanfang sowie das Fadenende des Bandagefadens werden mittels Reibschluss mit der Fadenbandage fixiert, wodurch eine Selbsthaltung erreicht wird.

Im Folgenden wird die Erfindung beispielhaft anhand einiger Figuren beschrieben. Es zeigen:
- FIG 1: eine Ausgestaltung eines Rotors einer elektrischen Maschine, welcher Permanentmagnete aufweist, welche mittels einer Fadenbandage auf dem Rotorpaket fixiert sind,
- FIG 2: eine Ausgestaltung eines Rotors einer elektrischen Maschine, bei welcher ein Fadenanfang eines Bandagefadens sowie ein Fadenende eines Bandagefadens jeweils mit einem Klebepunkt fixiert ist,
- FIG 3: einen Ausschnitt aus FIG 2,
- FIG 4: eine Ausgestaltung eines Mittels zur Fixierung mittels einer Kleberaupe,
- FIG 5: eine Draufsicht der Ausgestaltung gemäß FIG 4,
- FIG 6: eine Ausgestaltung eines Mittels zur Fixierung mittels eines doppelseitigen Klebebands,
- FIG 7: eine Draufsicht der Ausgestaltung gemäß FIG 6,
- FIG 8: eine Ausgestaltung des Mittels zur Fixierung mittels eines Kunststoffes,
- FIG 9: eine Ausgestaltung des Mittels zur Fixierung mittels einer Klemmnase in Seitenansicht,
- FIG 10: eine Ausgestaltung mittels einer Klemmnase und eingefügtem Bandagefaden,
- FIG 11: eine Ausgestaltung des mittels zur Fixierung mittels einer axialen Klemmnase,
- FIG 12: eine Seitenansicht der Ausgestaltung gemäß FIG 11,
- FIG 13: eine Ausgestaltung des Mittels zur Fixierung mittels eines Hakens und einem zu einer Öse geknoteten Bandagefadens,
- FIG 14: einen Ausschnitt aus FIG 13,
- FIG 15: eine Ausgestaltung eines Mittels zur Fixierung, bei welchem eine Selbsthaltung durch Reibschluss erreicht wird,
- FIG 16: die durch Reibschluss erreichte Fixierung nach vollständiger Umwicklung des Rotors,
- FIG 17: eine Ausgestaltung eines Mittels zur Fixierung für ein Fadenende eines Bandagefadens, wobei die Fixierung durch Reibschluss erreicht wird.

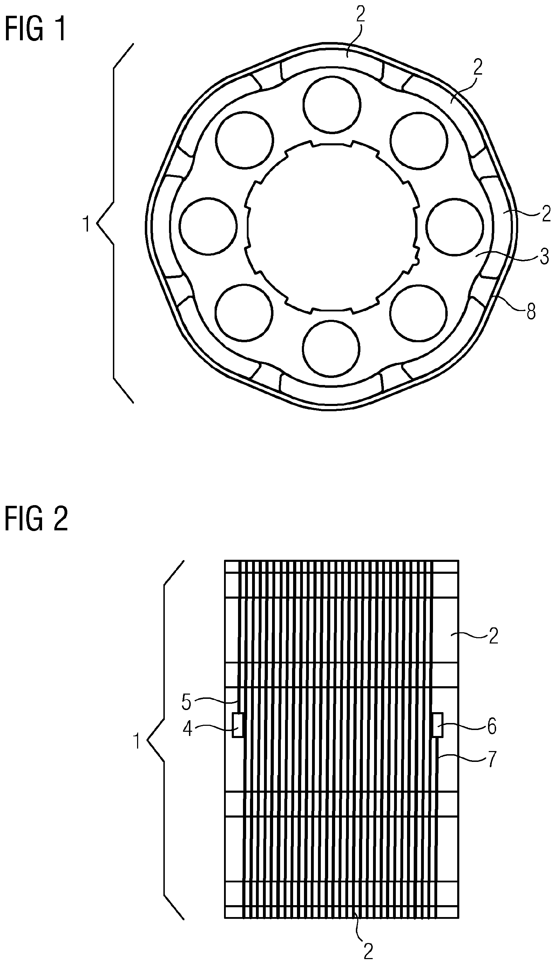

FIG 1 zeigt den Rotor 1 einer elektrischen Maschine in einer Seitenansicht. Auf der Oberfläche eines Rotorpakets 3 befinden sich Permanentmagnete 2. Das Rotorpaket ist als Blechpaket ausgeführt, von dem aus FIG 1 nur das vordere Blech ersichtlich ist. In dem ausgeführten Beispiel sind genau acht Permanentmagnete 2 angeordnet. Die Permanentmagnete 2 werden mittels einer Fadenbandage 8, vorzugsweise einer Glasfaserfadenbandage, auf dem Rotorpaket 3 fixiert und positioniert. Diese Fixierung und Positionierung ist wichtig, da die elektrische Maschine gegenüber hohen Drehzahlen beständig ausgeführt sein muss. Aufgrund der bereits oben erläuterten Vorteile wird hierbei eine Glasfaser bzw. ein Verbund aus Glasfasern, welche verdrillt angeordnet sind, eingesetzt.

FIG 2 zeigt eine erste Ausführungsform des Mittels zur Fixierung. Auf einem Rotor 1 sind Permanentmagnete 2 angeordnet. Auf einem Permanentmagneten 2 wird ein Fadenanfang 5 des Bandagefadens mittels eines Klebepunkts 4 fixiert. Der Klebepunkt 4 kann hiermit mittels eines UV-härtenden Klebstoffes realisiert werden und ist in der Figur als punktueller, d. h. nur einen Bereich des Fadenanfangs bedeckender, Klebepunkt ausgeführt. Der Fadenanfang 5 wird durch den Klebepunkt 4 fixiert. Anschließend wird der Bandagefaden in Umfangsrichtung vorzugsweise von einem vorderen axialen Ende zu einem hinteren axialen Ende um den Rotor gewickelt. Am hinteren axialen Ende wird das Fadenende 7 mittels eines weiteren Klebepunkts 6 fixiert. In der Figur wird genau ein Klebepunkt 4 für den Fadenanfang 5 und genau ein Klebepunkt 6 für das Fadenende 7 genutzt. Jedoch können auch während des Wickelvorgangs weitere Klebepunkte gesetzt werden, die sich beispielsweise zwischen den beiden beschriebenen Klebepunkten befinden. Somit wird eine weitere Fixierung der Fadenbandage erreicht. Ein UV-härtender Klebstoff ist insofern vorteilhaft, als die Fadenbandage mittels UV-Licht gehärtet werden kann und nicht mittels Zuführung von Wärme gehärtet werden muss. Denn eine Erhitzung von Permanentmagneten kann zu Magnetisierungsverlusten führen.

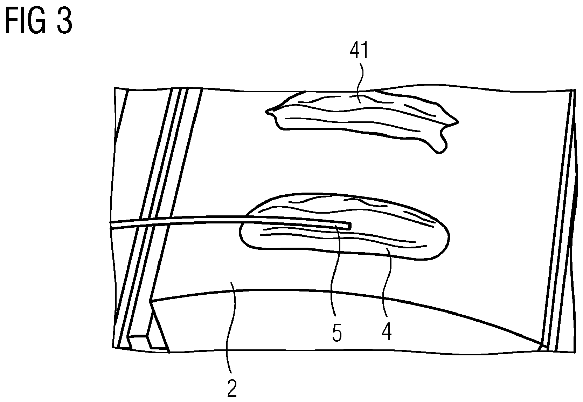

FIG 3 zeigt einen Ausschnitt aus FIG 2. In der Mitte auf einem Permanentmagneten 2 befindet sich ein Klebepunkt 4 aus einem flüssigen und UV-härtenden Klebstoff. Ein Fadenanfang 5 ist auf den Klebepunkt 4 zur Fixierung gelegt. Zudem existiert ein weiterer Klebepunkt 41, welcher den Bandagefaden circa in der Mitte des Permanentmagneten 2 fixiert. Der Klebepunkt für das Fadenende ist in FIG 3 nicht gezeigt. Die Klebepunkte müssen nicht als punktuelle Klebepunkte realisiert werden, sondern können auch als Klebestreifen von einem vorderen axialen Ende zu einem hinteren axialen Ende des Rotors realisiert werden. Die Streifen müssen nicht als durchgängige Streifen ausgeführt sein, sondern können auch Unterbrechungen aufweisen. Zudem besteht die Möglichkeit, die Klebepunkte nicht auf den Permanentmagneten 2 anzubringen, sondern in einer zwischen zwei Permanentmagneten 2 befindlichen Pollücke.

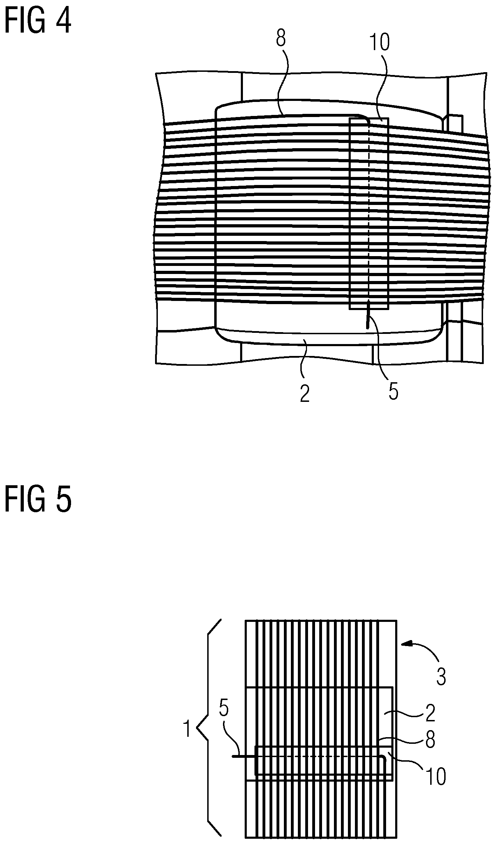

FIG 4 zeigt eine Ausgestaltung des Mittels zur Fixierung mittels einer Kleberaupe 10 in einer dreidimensionalen Ansicht. Auf einem Permanentmagneten 2 ist eine Kleberaupe 10 angebracht, vorzugsweise in Axialrichtung. Auch die Kleberaupe 10 stellt einen Klebepunkt dar, welcher jedoch als Klebestreifen ausgeführt ist. Der Fadenanfang 5 eines Bandagefadens 8, vorzugsweise eines Glasfaserfadens, wird in die Kleberaupe 10 gelegt. Anschließend wird der Rotor in Umfangsrichtung und in einem Strang von einem vorderen axialen Ende zu einem hinteren axialen Ende umwickelt. Eine Kleberaupe 10 eignet sich besonders, da diese eine definierte Breite und Dicke aufweist und ein Verlaufen des Klebstoffes, wie es bei flüssigem Klebstoff zu befürchten ist, nicht auftritt.

FIG 5 zeigt eine Draufsicht der Ausgestaltung gemäß FIG 4 in einer vereinfachten schematischen Ansicht. Auf einem Rotorpaket 3 befindet sich ein Permanentmagnet 2. Auf diesem Permanentmagneten 2 ist eine Kleberaupe 10 in Axialrichtung verlegt. Der Fadenanfang 5 des Bandagefadens 8 wird in die Kleberaupe 10 eingelegt und so auf dem Permanentmagneten 2 gehalten.

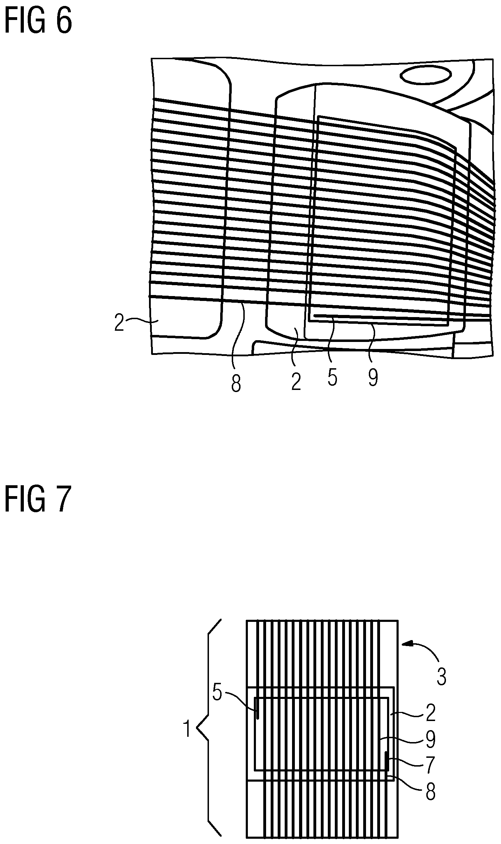

FIG 6 zeigt eine Ausgestaltung des Mittels zur Fixierung mittels eines doppelseitigen Klebebands 9 in einer dreidimensionalen Ansicht. Auf einem Permanentmagneten 2 ist ein doppelseitiges Klebeband 9 angebracht, vorzugsweise in Axialrichtung. Auch das doppelseitige Klebeband 9 stellt einen Klebepunkt dar, welcher als Klebestreifen ausgeführt ist. Der Fadenanfang 5 eines Bandagefadens 8, vorzugsweise eines Glasfaserfadens, wird auf dem axial ausgerichteten doppelseitigen Klebeband 9 befestigt. Anschließend wird der Rotor in Umfangsrichtung und in einem Strang von einem vorderen axialen Ende zu einem hinteren axialen Ende umwickelt. Ein doppelseitiges Klebeband eignet sich besonders, da dieses eine definierte Breite und Dicke aufweist und ein Verlaufen des Klebstoffes, wie es bei flüssigem Klebstoff zu befürchten ist, nicht auftritt. Da das doppelseitige Klebeband 9 als Klebestreifen vorzugsweise in Axialrichtung fast vom vorderen axialen Ende bis fast zum hinteren axialen Ende des Rotors angebracht ist, wird der Bandagefaden 8 bei jeder Windung erneut auf dem doppelseitigen Klebeband 9 fixiert.

FIG 7 zeigt eine Draufsicht der Ausgestaltung gemäß FIG 6 in einer vereinfachten schematischen Ansicht. Auf einem Rotorpaket 3 befindet sich ein Permanentmagnet 2. Auf diesem Permanentmagneten 2 befindet sich ein doppelseitiges Klebeband 9 in Axialrichtung. Der Bandagefaden wird in dieser Ausführungsform sowohl am Fadenanfang 5 als auch am Fadenende 7 sowie auch bei jeder Windung der Umwicklung durch das doppelseitige Klebeband 9 auf dem Permanentmagneten 2 gehalten.

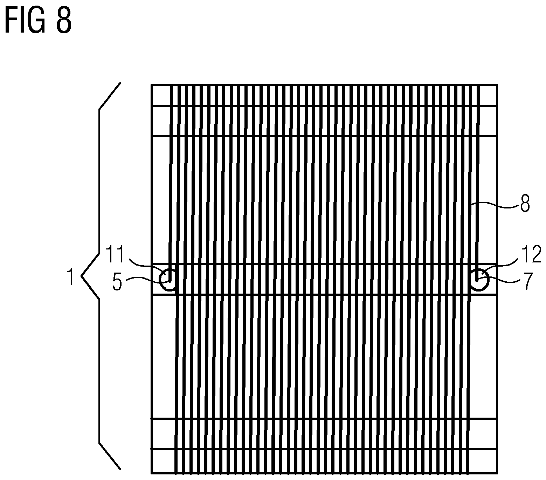

FIG 8 zeigt eine Ausgestaltung eines Mittels zur Fixierung, bei welchem vorzugsweise in der Pollücke zwischen zwei Permanentmagneten ein Klebepunkt 11 aus wenigstens einem Kunststoff, vorzugsweise ein Thermoplast, angebracht ist, in welchem ein Fadenanfang 5 des Bandagefadens 8 fixiert wird. Nach vollständiger Umwicklung des Rotors 1 wird der Bandagefaden 8, vorzugsweise ein Glasfaserfaden, mit dem Fadenende 7 in einem weiteren Klebepunkt 12 fixiert. Auch diese Fixierung ist als punktueller Klebepunkt oder als Klebstreifen oder als unterbrochener Klebestreifen möglich.

Die Figuren 1 bis 8 zeigen verschiedene Mittel zur Fixierung einer Fadenbandage, wobei hier keine Bauteile benötigt werden. Alleine der Einsatz eines Klebstoffes, vorzugsweise eines UV-härtenden Klebstoffes, genügt für die Fixierung des Fadenanfangs und des Fadenendes.

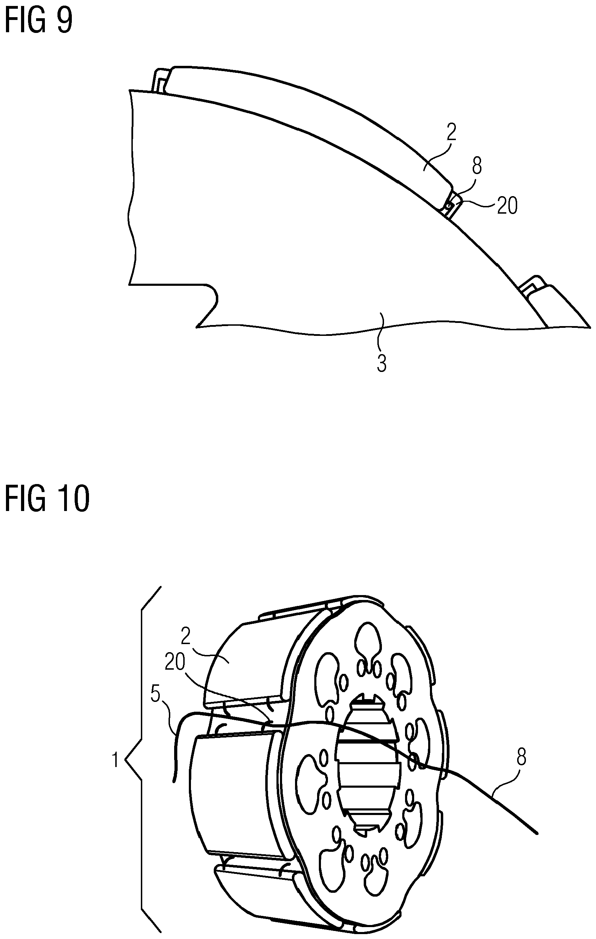

FIG 9 zeigt eine Ausgestaltung eines Mittels zur Fixierung, bei welchem das Rotorpaket eine Klemmnase 20 aufweist. Das Rotorpaket 3 ist vorzugsweise als Blechpaket ausgeführt. Der Querschnitt des Rotors wird hierbei aus einem Blech ausgestanzt und später mit anderen ausgestanzten Blechen zu einem Rotorpaket zusammengefügt. Somit ist bereits die Kontur der Klemmnase 20 im Querschnitt des Blechs vorhanden. Im zusammengefügten Zustand weist das Rotorpaket pro Pollücke, die sich zwischen zwei Permanentmagneten 2 befindet, genau vier Klemmnasen auf. Aus Symmetriegründen ist pro Pollücke dieselbe Anzahl an Klemmnasen ausgeführt, auch wenn für die Fixierung eines Fadenanfangs nur eine Klemmnase benötigt wird. Jede Klemmnase 20 zeigt vorzugsweise mit ihrer Nasenspitze in Richtung eines Permanentmagneten 2. Somit wird auch jeder Permanentmagnet 2 von genau vier Klemmnasen 20 zusätzlich gehalten. Der Anfang einer Fadenbandage 8 wird in dieser Ausgestaltung zwischen die Klemmnase 20 und den Permanentmagneten 2 geklemmt. Anschließend erfolgt eine Umwicklung vorzugsweise in Umfangsrichtung und in einem Strang um den Rotor. Da nach vollständiger Bandagierung des Rotors die Klemmnasen verdeckt sind, eignet sich diese Ausgestaltung besonders gut für den Fadenanfang eines Glasfaserfadens.

FIG 10 eine Ausgestaltung mittels einer Klemmnase 20 und eingefügtem Bandagefaden 8. Die Klemmnase 20 zeigt mit ihrer Nasenspitze in Richtung des Permanentmagneten 2. Der Fadenanfang 5 eines Bandagefadens 8 wird zwischen einer Klemmnase und dem Permanentmagneten 2 fixiert.

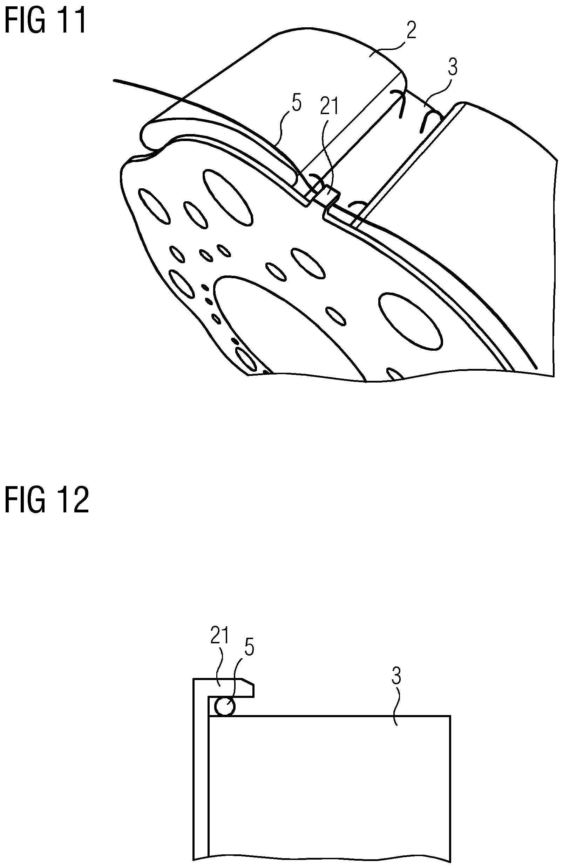

FIG 11 zeigt eine weitere Ausführungsform des Mittels zur Fixierung mittels einer Klemmnase 21, deren Nasenspitze in Axialrichtung zeigt. In einer Pollücke zwischen zwei Permanentmagneten 2 befindet sich vorzugsweise genau eine Klemmnase 21, in welcher der Fadenanfang eines Bandagefadens 8 fixiert wird. Aus Symmetriegründen befindet sich pro Pollücke genau eine Klemmnase 21 auf dem Rotorpaket 3. Der Fadenanfang 5 wird in der Klemmnase 21 fixiert. Anschließend wird der Rotor mit dem Bandagefaden vorzugsweise vollständig und in einem Strang umwickelt. Nach vollständiger Umwicklung des Rotors kann das Fadenende in einer vorzugsweise anderen Klemmnase befestigt werden.

FIG 12 zeigt eine Seitenansicht aus FIG 11. Die Klemmnase 21 ist hierbei deutlich sichtbar. Die Nasenspitze der Klemmnase 21 zeigt in Axialrichtung. In der Klemmnase 21 wird der Glasfaserfadenanfang 5 befestigt. Aus Symmetriegründen befindet sich pro Pollücke genau eine Klemmnase 21 auf dem Rotorpaket 3.

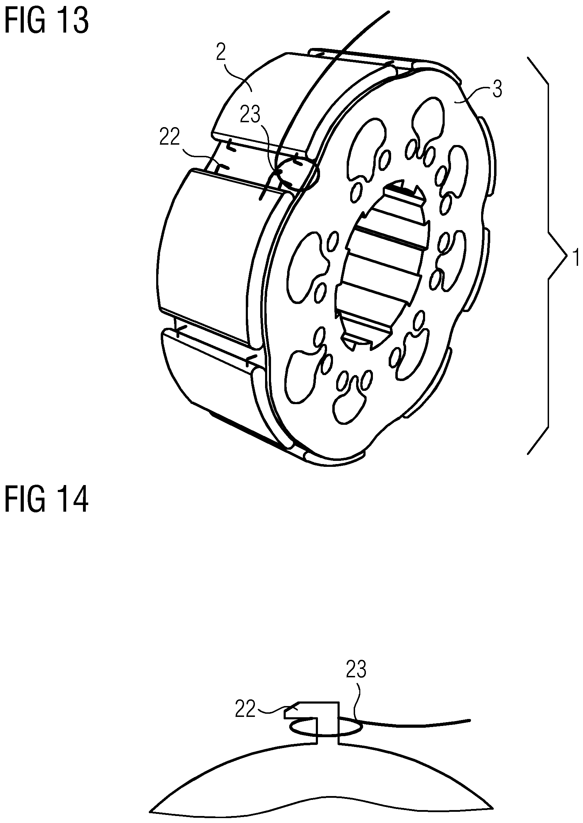

FIG 13 zeigt eine weitere Ausgestaltung eines Mittels zur Fixierung. Vorzugsweise in der Pollücke auf dem Rotorpaket 3 zwischen zwei Permanentmagneten 2 befindet sich wenigstens ein Haken 22, an welchem ein zu einer Öse geknoteter Bandagefaden 23, vorzugsweise ein Glasfaserfaden, fixiert ist. Dieses Mittel zur Fixierung ist nur bei einem Fadenanfang möglich. Die geknotete Öse 23 wird am Haken 22 befestigt. Anschließend wird der Bandagefaden, vorzugsweise als Glasfaserfaden ausgeführt, vorzugsweise in Umfangsrichtung und in einem Strang um den Rotor gewickelt. Pro Pollücke befinden sich aus Symmetriegründen vorzugsweise vier Haken.

FIG 14 zeigt eine Seitenansicht eines Ausschnitts aus FIG 13. Der Haken 22 ist hierbei deutlich sichtbar. Ein zu einer Öse geknoteter Glasfaserfaden 23 wird am Haken 22 fixiert.

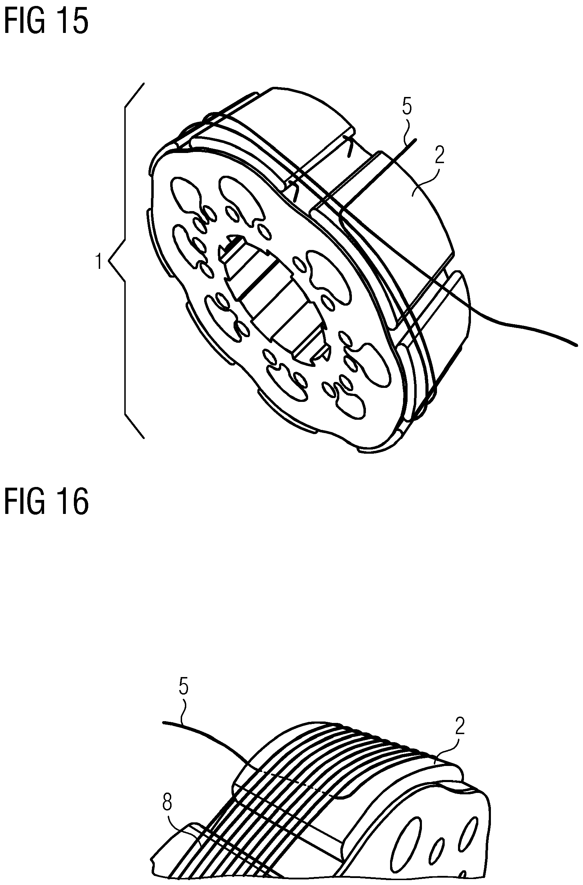

FIG 15 zeigt eine weitere Ausführungsform des Mittels zur Fixierung, bei welcher der Fadenanfang 5 durch Reibschluss auf dem Permanentmagneten 2 gehalten wird. Der Fadenanfang 5 wird in einem Winkel zur Umfangsrichtung, der größer als 0° ist, auf den Permanentmagneten 2 gelegt. Vorteilhaft wird der Fadenanfang in einem Winkel von ca. 90° zur Umfangsrichtung, d. h. in Axialrichtung auf den Permanentmagneten 2 gelegt und gehalten. Anschließend wird der Bandagefaden in Umfangsrichtung und in einem Strang um den Rotor gewickelt, wodurch auch der Fadenanfang 5 umwickelt wird. Durch Reibschluss zwischen dem Fadenanfang 5 und der Fadenbandage wird eine Fixierung erreicht. Dieses Mittel zur Fixierung, auch als sogenannte Selbsthaltung bezeichnet, zeigt einen kostengünstigen und einfachen Weg, da hierbei keine neuen Bauteile in der Pollücke geschaffen werden müssen und auch auf die Verwendung von Klebstoff verzichtet werden kann.

FIG 16 zeigt die Ausgestaltung nach vollständiger Umwicklung des Rotors. Der Fadenanfang 5 wird hierbei von der Fadenbandage in Form des umwickelten Bandagefadens 8 auf dem Permanentmagneten 2 gehalten. Das Mittel zur Fixierung ist die Selbsthaltung.

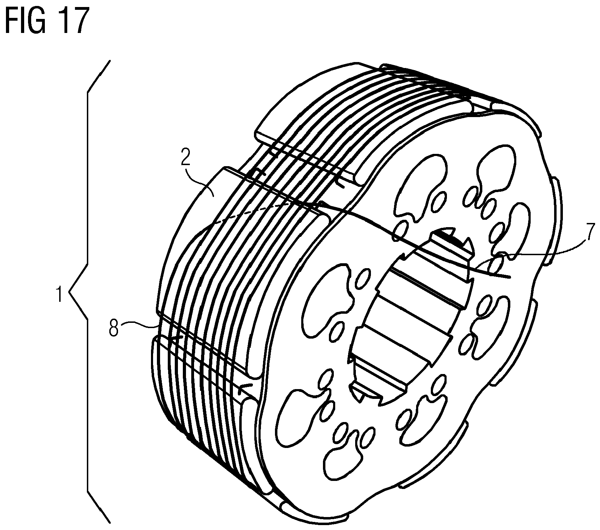

FIG 17 zeigt eine Ausgestaltung für ein Fadenende 7. Nach vollständiger Bandagierung des Rotors wird das Fadenende 7, beispielsweise mittels Pressluft, durch eine Pollücke zum anderen Ende hin befördert. Ist das Fadenende durch die Pollücke gebracht, wird der Faden zwischen Fadenbandage und Permanentmagnet 2 gezogen und somit mittels Reibschluss gehalten. Auch dies stellt eine Selbsthaltung dar.

Die in den Figuren beispielhaft beschriebenen Ausführungsformen können für eine Befestigung des Fadenanfangs und/oder des Fadenendes eines Bandagefadens genutzt werden. Auch eine Kombination dieser Ausführungsformen ist möglich.

## Patentansprüche

**1.** Rotor (1) einer elektrischen Maschine, der wenigstens ein Rotorpaket (3) und wenigstens zwei Permanentmagnete (2) umfasst, wobei die Permanentmagnete (2) an der Oberfläche des Rotorpakets (3) angeordnet und durch wenigstens eine Bandage an der Oberfläche des Rotorpakets (3) fixiert und positioniert sind, **dadurch gekennzeichnet, dass** der Rotor (1) am Rotorpaket (3) und/oder an wenigstens einem Permanentmagneten (2) wenigstens ein Mittel zur Fixierung eines Fadenanfangs (5) und/oder eines Fadenendes (7) eines Bandagefadens aufweist.

**2.** Rotor (1) einer elektrischen Maschine nach Anspruch 1, wobei eine Umwicklung des Rotors mit dem Bandagefaden eine als Fadenbandage ausgeführte Bandage ausbildet.

**3.** Rotor (1) einer elektrischen Maschine nach einem der Ansprüche 1 oder 2, wobei der Bandagefaden als Glasfaser-Bandagefaden ausgeführt ist.

**4.** Rotor (1) einer elektrischen Maschine nach einem der Ansprüche 1 bis 3, wobei das Mittel zur Fixierung wenigstens einen Klebstoff umfasst, welcher vorzugsweise UV-härtend ist.

**5.** Rotor (1) einer elektrischen Maschine nach einem der Ansprüche 1 bis 4, wobei das Mittel zur Fixierung als Kleberaupe (10) ausgeführt ist.

**6.** Rotor (1) einer elektrischen Maschine nach einem der Ansprüche 1 bis 4, wobei das Mittel zur Fixierung als doppelseitiges Klebeband (9) ausgeführt ist.

**7.** Rotor (1) einer elektrischen Maschine nach einem der vorhergehenden Ansprüche, wobei das Mittel zur Fixierung wenigstens einen Kunststoff, vorzugsweise ein Thermoplast, umfasst.

**8.** Rotor (1) einer elektrischen Maschine nach einem der vorhergehenden Ansprüche, wobei das Mittel zur Fixierung in einer zwischen zwei Permanentmagneten (2) befindlichen Pollücke angebracht ist.

**9.** Rotor (1) einer elektrischen Maschine nach einem der vorhergehenden Ansprüche, wobei das Mittel zur Fixierung als Bauteil in wenigstens einer zwischen zwei Permanentmagneten (2) befindlichen Pollücke ausgeführt ist.

**10.** Rotor (1) einer elektrischen Maschine nach einem der vorhergehenden Ansprüche, wobei das in der Pollücke befindliche Bauteil als wenigstens eine Klemmnase (20) ausgeführt ist.

**11.** Rotor (1) einer elektrischen Maschine nach Anspruch 11, wobei die Klemmnase (20) an den Permanentmagneten (2) angrenzend ausgeführt ist und eine Nasenspitze der Klemmnase (20) in Richtung des Permanentmagneten (2) zeigt.

**12.** Rotor (1) einer elektrischen Maschine nach einem der Ansprüche 10 oder 11, wobei an einem bezüglich Umfangsrichtung linken und an einem in Umfangsrichtung rechten Ende des Permanentmagneten (2) jeweils genau eine Klemmnase (20) ausgeführt ist.

**13.** Rotor (1) einer elektrischen Maschine nach einem der vorhergehenden Ansprüche, wobei die Klemmnase mit einer in Axialrichtung gerichteten Nasenspitze ausgeführt ist.

**14.** Rotor (1) einer elektrischen Maschine nach einem der vorhergehenden Ansprüche, wobei in einer Pollücke genau eine Klemmnase mit in Axialrichtung gerichteter Nasenspitze (21) ausgeführt ist.

**15.** Rotor (1) einer elektrischen Maschine nach einem der Ansprüche 9 bis 14, wobei das in der Pollücke befindliche Bauteil als wenigstens ein Haken (22) ausgeführt ist.

**16.** Rotor (1) einer elektrischen Maschine nach einem der vorhergehenden Ansprüche, wobei das Mittel zur Fixierung als eine Selbsthaltung des Bandagefadens ausgeführt ist.

**17.** Rotor (1) einer elektrischen Maschine nach einem der vorhergehenden Ansprüche, wobei die Fadenbandage, vorzugsweise durch die Benetzung mit wenigstens einem, vorzugsweise UV-härtenden, Klebstoff und/oder Harz sowie durch eine Bestrahlung mit vorzugsweise UV-Strahlen, ausgehärtet ausgeführt ist.

**18.** Verfahren zur Bandagierung eines Rotors (1) einer elektrischen Maschine nach einem der Ansprüche 1 bis 17, der wenigstens ein Mittel zur Fixierung eines Fadenanfangs (5) und/oder eines Fadenendes (7) eines Bandagefadens (8) aufweist, wobei ein Fadenanfang (5) eines Bandagefadens (8) an einem Anfangshaltepunkt des Mittels zur Fixierung und/oder ein Fadenende (7) des Bandagefadens an einem Endhaltepunkt des Mittels zur Fixierung befestigt wird.

**19.** Verfahren nach Anspruch 18, wobei der Fadenanfang (5) des Bandagefadens am Anfangshaltepunkt fixiert und der Rotor (1) vom Bandagefaden (8), vorzugsweise in einem Strang und in Umfangsrichtung des Rotors (1), umwickelt wird.

**20.** Verfahren nach Anspruch 19, wobei der Fadenanfang (5) eines Bandagefadens (8) in einem Winkel zur Umfangsrichtung, der größer 0° ist, vorzugsweise in Axialrichtung, über den Rotor (1) gelegt wird und der Rotor (1) vom Bandagefaden (8), vorzugsweise in einem Strang und in Umfangsrichtung des Rotors (1), umwickelt wird.

**21.** Verfahren nach einem der vorhergehenden Ansprüche, wobei der Bandagefaden (8) von einem vorderen axialen Ende des Rotors (1) zu einem hinteren axialen Ende des Rotors (1) zur Erreichung einer Fadenbandage gewickelt wird.

**22.** Verfahren nach einem der vorhergehenden Ansprüche, wobei der Bandagefaden (8) mehrmals und/oder mehrlagig um den Rotor (1) gewickelt wird.

**21.** Verfahren nach einem der vorhergehenden Ansprüche, wobei, vorzugsweise nach vollständiger Umwicklung des Rotors (1), das Fadenende (7) des Bandagefadens (8) am Endhaltepunkt fixiert wird.

**22.** Verfahren zur Bandagierung eines Rotors (1) einer elektrischen Maschine nach einem der vorhergehenden Ansprüche, wobei das Fadenende (7) des Bandagefadens (8), vorzugsweise nach vollständiger Bandagierung des Rotors (1), durch eine zwischen zwei Permanentmagneten (2) befindliche Pollücke gezogen und zwischen wenigstens einen Permanentmagneten (2) und die Fadenbandage geklemmt wird.

**23.** Verfahren zur Bandagierung eines Rotors (1) einer elektrischen Maschine nach einem der vorhergehenden Ansprüche, wobei die Fadenbandage, vorzugsweise nach vollständiger Bandagierung des Rotors (1), mit wenigstens einem, vorzugsweise UV-härtenden, Klebstoff und/oder Harz benetzt und vorzugsweise mittels UV-Strahlung ausgehärtet wird.
